# EUROPÄISCHE PATENTSCHRIFT

(11) **EP 1 430 249 B1**
(45) Veröffentlichungstag und Bekanntmachung des Hinweises auf die Patenterteilung: **31.12.2008**
(21) Anmeldenummer: 02800012.3
(22) Anmeldetag: 26.09.2002
(51) Int. Cl.: F16L 33/04

(54) **BEFESTIGUNGSVORRICHTUNG**
FIXING DEVICE
DISPOSITIF DE FIXATION

(30) Priorität: 27.09.2001 DE 10147611
(43) Veröffentlichungstag der Anmeldung: 23.06.2004
(73) Patentinhaber: HYDAC Accessories GmbH, 66125 Saarbrücken-Dudweiler (DE)
(72) Erfinder: HOLTHAUS, Reinhard, 33428 Harsewinkel (DE); SCHMID, Thomas, 66386 St. Ingbert (DE)
(74) Vertreter: Bartels, Martin Erich Arthur
(86) Internationale Anmeldenummer: PCT/EP2002/010780
(87) Internationale Veröffentlichungsnummer: WO 2003/029714

(56) Entgegenhaltungen:
- EP-A- 0 508 331
- DE-B- 1 256 013
- GB-A- 583 719

## Beschreibung

Die Erfindung betrifft eine Befestigungsvorrichtung mit einem Schellenband, wobei zumindest ein Ende des Schellenbandes unter Bildung einer Aufnahmeschlaufe umgeschlagen ist, die mittels zweier Umfassungsteile einen Aufnahmeraum umfaßt, in den ein Haltemittel einsetzbar ist, und der zumindest eine zwischen den beiden Umfassungsteilen angeordnete Aufnahmeöffnung besitzt, wobei das Haltemittel für eine Anlage mit den beiden Umfassungsteilen zwei einander gegenüberliegende Halteteile aufweist sowie über ein Funktionsteil verfügt, das in eingesetztem Zustand des Haltemittels im Aufnahmeraum aus der Aufnahmeöffnung herausragt, wobei das Haltemittel mit mindestens einem seiner beiden Halteteile in einer Einsetzrichtung über die Aufnahmeöffnung in den Aufnahmeraum einbringbar ist, wobei nach Verschwenken des zumindest teilweise eingebrachten Haltemittels in einer Festlegerichtung quer zur Einsetzrichtung die Halteteile in untergreifende Anlage bringbar sind mit den Umfassungsteilen, wobei der Aufnahmeraum derart dimensioniert ist, daß mit einem vorgebbaren Spiel das eingebrachte Haltemittel mit seinen beiden Halteteilen in den Aufnahmeraum eingreift, wobei das jeweilige Haltemittel zwei diametral einander gegenüberliegende Halteteile mit Halteflächen aufweist, wobei das Funktionsteil zumindest teilweise senkrecht zur gemeinsamen Längsachse der Halteteile verläuft, und wobei die jeweilige Haltefläche mit einer konvexen Krümmung versehen ist.

Eine bekannte Befestigungsvorrichtung nach der EP-A-0 508 050 weist ein biegsames, einstückiges Schellenband auf, wobei die beiden freien Enden zum Festlegen eines rohrförmigen Bauteils mit einem Verschlußteil verschließbar sind. Zur Bildung des genannten Verschlußteils sind die beiden freien Enden des Schellenbandes umgeschlagen und bilden jeweils eine Aufnahmeschlaufe aus mit jeweils zwei Umfassungsteilen, die zwischen sich einen Aufnahmeraum begrenzen, der über eine Aufnahmeöffnung ins Freie mündet. In die beiden Aufnahmeräume sind jeweils zylindrische Haltemittel eingesetzt, wobei die Umfassungsteile der einen Aufnahmeschlaufe ein bolzenartiges Haltemittel fest umfassen, wohingegen die andere Aufnahmeschlaufe mit ihren beiden Umfassungsteilen lose ein Schwenkteil als Haltemittel umgreift. Das Schwenkteil ist von einer Innensechskantschraube durchgriffen, die mittels einer Festlegemutter in ihrer Funktionslänge einstellbar ist und in dieser Position festlegbar ist. Des weiteren stellt die Innensechskantschraube sicher, daß das Schwenkteil nicht seitlich ungewollt aus dem Aufnahmeraum der zugehörigen Aufnahmeschlaufe herausfallen kann. Das bolzenartige Haltemittel, festgehalten von der gegenüberliegenden Aufnahmeschlaufe, weist nach oben hin eine in die Umgebung mündende Ausnehmung auf, die mit einem nasenartigen Rastteil versehen ist, so daß nach Einschwenken der Innensechskantschraube von oben her diese mit ihrem Kopfteil in der Verrastung für einen Anziehvorgang festlegbar ist. Das derart ausgebildete Verschlußteil läßt sich schnell zum Festlegen von rohrförmigen Körpern innerhalb des Schellenbandes lösbar schließen und durch die in der Verrastung aufgenommene Schraube ist diese beim Anziehen entsprechend fixiert.

Die bekannte Schelle wird dem Grunde nach im Werk vormontiert und vor Ort an dem zu befestigenden Körper festgelegt. Demgemäß können vorbestimmte Schellen auch nur für einen bestimmten Festlegezweck eingesetzt werden in Abhängigkeit des Durchmessers des festzulegenden rohrförmigen Körpers. Im Hinblick auf die vormontierten und stationär in den Aufnahmeschlaufen festgelegten und fixierten Haltemittel läßt sich die bekannte Befestigungsvorrichtung vor Ort kaum komplementieren und auch ein Ausbau der Schelle ist nur im Gesamten mit allen Funktionsteilen möglich. Aufgrund der Vielzahl der Funktionsteile und deren Zusammenbau am Ort der Herstellung ist darüber hinaus die bekannte Lösung relativ kostenintensiv, so daß sie für einfache Befestigungszwecke technisch zu aufwendig ausgebildet ist.

Durch die gattungsgemäße DE-B-1 256 013 ist eine Bandklemme zum Verbinden zweier Rohrleitungsenden oder eines Schlauches mit einem Rohrstutzen bekannt, bestehend aus einem Spannband und einer in der Nähe der Spannbandenden befestigten Spanneinrichtung, wobei die über die Befestigungsstellen der Spanneinrichtung vorstehenden Spannbandenden für Bandklemmen mit nach dem Anspannen entfernbaren Spanneinrichtungen in an sich bekannter Weise einerseits mit einem Schlitz, andererseits mit einem beim Spannen in den Schlitz verriegelnd eingreifenden, sich senkrecht vom Spannband nach außen erstreckenden Haken versehen sind.

Bei der bekannten Lösung sind die beiden aufeinander zugewandten Spannbandenden mit ihren Umfassungsteilen entsprechend umgelegt und bilden dergestalt Aufnahmeöffnungen und Aufnahmeräume aus, einmal für einen Festlegebolzen mit Spannaußengewinde und einmal in Form eines Festlegeteils mit einer mit einem Innengewinde versehenen Spannmutter.

Sowohl der Festlegebolzen als auch das Festlegeteil bilden verschieden geformte Haltemittel aus, die jeweils über zwei diametral zueinander angeordnete Halteteile in den zugehörigen Aufnahmeräumen des Schellenbandes schwenkbar geführt sind. Das jeweilige Halteteil ist dabei in der Art eines Bolzens oder Zapfens ausgebildet mit im Querschnitt kreisförmigen Halteflächen, die mit ihrer konvexen Krümmung dem Krümmungsverlauf des umgelegten Schellenbandes im Bereich des zuordenbaren Aufnahmeraumes folgen. Das genannte Festlegeteil mit Spannmutter ist wiederum an der Stätte der Herstellfirma im Schellenband festzulegen und der Festlegebolzen mit dem Spannaußengewinde als Funktionsteil kann vor Ort, also an der Stelle der Montage der Schelle, in den zugeordneten Aufnahmeraum über die dahingehende Aufnahmeöffnung eingesetzt werden. Obwohl die schlitzförmige Aufnahmeöffnung relativ breit im Schellenband verlaufend angeordnet ist, kommt es während des Einsetzvorganges häufig zu einem Verhaken des dahingehenden Haltemittels, was den Einsetz- und Montagevorgang entsprechend erschwert. Soll die bekannte Schellenkonstruktion für andere Einsatzzwecke im Umfang ihrer Funktionsteile umgebaut werden, ist dies aufgrund der gewählten Verbindungen zwischen Schellenband und Funktionsteil nur schwer möglich.

Ausgehend von diesem Stand der Technik liegt der Erfindung die Aufgabe zugrunde, demgegenüber eine Befestigungsvorrichtung mit wenig Bauteilen zu schaffen, die sich auch vor Ort, also am Ort der Montage, ohne weiteres in einfacher Weise zu einer Schelle komplementieren lassen und die in einem weiten Feld montagefreundlich und funktionssicher Befestigungsaufgaben abdecken kann. Eine dahingehende Aufgabe löst eine Befestigungsvorrichtung mit den Merkmalen des Patentanspruches 1 in seiner Gesamtheit.

Dadurch, daß gemäß dem kennzeichnenden Teil des Patentanspruches 1 die konvexe Krümmung dem Funktionsteil zugewandt sich im wesentlichen entlang eines Halbkreisbogens quer zur gemeinsamen Längsachse der Halteteile erstreckt und daß die voneinander abliegenden Endflächen der Halteteile auf der dem Funktionsteil abgewandten Seite jeweils mit einer Einführschräge versehen sind, die jeweils in den zugeordneten Halbkreisbogen übergehen, ist es möglich, zunächst das Schellenband vorzubereiten und für eine Montage zur Verfügung zu stellen und dann vor Ort durch Einsetzen der jeweiligen Haltemittel in die zuordenbare Aufnahmeschlaufe die Befestigungsmittel bereitzustellen, die notwendig sind, um die Schelle an weiteren Baukomponenten unmittelbar festzulegen. Dabei kann durch entsprechendes Biegen des Schellenbandes dieses vor Ort in einfacher Weise an die geometrischen Außenabmessungen des festzulegenden Körpers angepaßt werden, der somit nicht zwingend rohrförmig zu sein braucht.

Die Art des Einsetzens des Haltemittels in die jeweilige Aufnahmeschlaufe ist über die halbkreisförmige Ausgestaltung der Halteteile und deren Einführschrägen derart erleichtert, daß sich der Festlegevorgang zum einen für einen Monteur nicht nur ohne weiteres in sinnfälliger Weise ergibt, sondern der dahingehende Montage- und gegebenenfalls Demontagevorgang fällt derart leicht, daß in rascher zeitlicher Abfolge die notwendigen Tätigkeitsschritte bei einer Vielzahl von Schellenverbindungen durchführbar sind, ohne daß es hier zu einem störenden Verhaken oder dergleichen kommen könnte. Hieraus ergibt sich insgesamt eine deutlich verbesserte Handhabung der Befestigungsvorrichtung und etwaige Fehlmontagen sind dergestalt gleichfalls ausgeschlossen. Auch kann nach Entfernen der Haltemittel das Schellenband ohne weiteres gelöst werden, wobei die Haltemittel auch am Festlegeort verbleiben können. Selbstverständlich besteht aber auch die Möglichkeit, die Befestigungsvorrichtung als Ganzes bereits im Werk komplementiert vor Ort im zusammengesetzten Zustand einzusetzen.

Die erfindungsgemäße Befestigungsvorrichtung hat sich insbesondere für den Einsatz in der Kraftfahrzeugindustrie als tauglich erwiesen, beispielsweise wenn es darum geht, Vibrationen unterliegende Luftfilter od. dgl. im Fahrzeugraum sicher festzulegen.

Bei einer bevorzugten Ausführungsform der erfindungsgemäßen Befestigungsvorrichtung verläuft die Aufnahmeöffnung der jeweiligen Aufnahmeschlaufe entlang der Längsachse des Schellenbandes, wobei die Aufnahmeöffnung mindestens zwei Teilbereiche mit unterschiedlichen Öffnungsquerschnitten aufweist und wobei der Teilbereich mit dem größeren Öffnungsquerschnitt zum Einsetzen des Haltemittels und der andere Teilbereich mit dem kleineren Öffnungsquerschnitt dem Durchgriff des Funktionsteils bei in der Aufnahmeschlaufe vollständig eingesetztem Haltemittel dient. Hierdurch ist zum einen ein einfaches Einsetzen des jeweiligen Haltemittels in die zugeordnete Aufnahmeschlaufe gewährleistet und dennoch kann bei eingesetztem Haltemittel, soweit das Funktionsteil den Teilbereich mit dem kleineren Öffnungsquerschnitt durchgreift, das Haltemittel nicht ungewollt aus der Aufnahmeschlaufe herausfallen, was die Montage-Handhabung mit der erfindungsgemäßen Befestigungsvorrichtung deutlich erleichtert.

Bei einer weiteren bevorzugten Ausführungsform der erfindungsgemäßen Befestigungsvorrichtung ist neben den beiden Teilbereichen ein dritter Teilbereich vorhanden, der in der Art eines Schlitzes mit weiter reduziertem Öffnungsquerschnitt ausgebildet sich an den zweiten Teilbereich in Richtung des Schellenbandes anschließt und einen Anschlag für das Funktionsteil ausbildet. Über den genannten Schlitz, soweit er von den beiden Umfassungsteilen begrenzt ist, lassen sich sicher die auf die Aufnahmeschlaufe wirkenden Kräfte, beispielsweise auch in Form von Vibrationskräften, in das sonstige Schellenband ableiten. Obwohl die Schellenstruktur durch den Schlitz an sich geschwächt ist, läßt sich doch dergestalt ein erhöhtes Maß an Stabilität erreichen. Dadurch, daß der Schlitz darüber hinaus einen Anschlag für das Funktionsteil ausbildet, ist sichergestellt, daß nachher automatisch das Schellenband in der Montagestellung die richtige, zugeordnete Funktionsstellung gegenüber dem Funktionsteil des jeweiligen Haltemittels einnimmt.

Vorzugsweise ist dabei des weiteren vorgesehen, daß das jeweilige Haltemittel zwei diametral einander gegenüberliegende Halteteile mit Halteflächen aufweist und daß das Funktionsteil senkrecht zur gemeinsamen Längsachse der Halteteile verläuft.

Vorzugsweise ist dabei ferner vorgesehen, daß die Umfassungsteile der jeweiligen Aufnahmeschlaufe unter Bildung von Anlageflächen mit einer konvexen Krümmung versehen sind, die bei festgelegtem Haltemittel der konvexen Krümmung der Halteflächen entspricht. Durch die konvexe Krümmungsanpassung von Anlageflächen zu Halteflächen ist im festgelegten Zustand des Haltemittels, auch wenn das Haltemittel selbst nicht durch die Aufnahmeschlaufe vollständig umfaßt und gehalten ist, eine sichere Anlage nebst der gewünschten Kraft-ableitung in das Schellenband erreicht.

Bei einer weiteren bevorzugten Ausführungsform der erfindungsgemäßen Befestigungsvorrichtung ist das jeweilige Funktionsteil an seinem freien Ende mit einem Einschraubgewinde versehen oder weist einen Festlegebolzen auf, dessen freie Enden bei eingesetztem Haltemittel im Bereich der beiden Längsränder des Schellenbandes enden. Hierdurch läßt sich über eine Art Krampe das Funktionsteil mit dem Festlegebolzen durch einen einfachen Handgriff festlegen und durch eine für das Einschraubgewinde vorgesehene Kontermutter läßt sich das dahingehende Haltemittel festlegen und mithin das Schellenband für einen Festlegevorgang entsprechend spannen.

Vorzugsweise ist dabei das Haltemittel einstückig in der Art eines Hammerkopfes ausgebildet, wobei das Schellenband von Hand biegsam ausgestaltet ist. Das Haltemittel besteht dabei vorzugsweise aus einer Art Schraubenstahl und ist mithin zäh ausgebildet, um dergestalt hohe Kräfte aufnehmen zu können. Dadurch, daß das Schellenband sehr biegsam ist, kann es, obwohl es aus einem bandartigen Stahlwerkstoff besteht, unmittelbar vor Ort an die Gegebenheiten für einen Festlegevorgang angepaßt werden.

Im folgenden ist die erfindungsgemäße Befestigungsvorrichtung anhand eines Ausführungsbeispiels nach der Zeichnung näher erläutert.

Dabei zeigen in prinzipieller und nicht maßstäblicher Darstellung die
- Fig.1: eine Draufsicht auf die Befestigungsvorrichtung mit Schellen- band und eingesetzten Haltemitteln;
- Fig.2: eine Seitenansicht auf die Befestigungsvorrichtung nach der Fig.1;
- Fig.3,4 und 5: zwei verschiedene Seitenansichten sowie eine Unteransicht auf das eine Haltemittel;
- Fig.6,7 und 8: zwei verschiedene Seitenansichten sowie eine Unteransicht auf das andere Haltemittel.

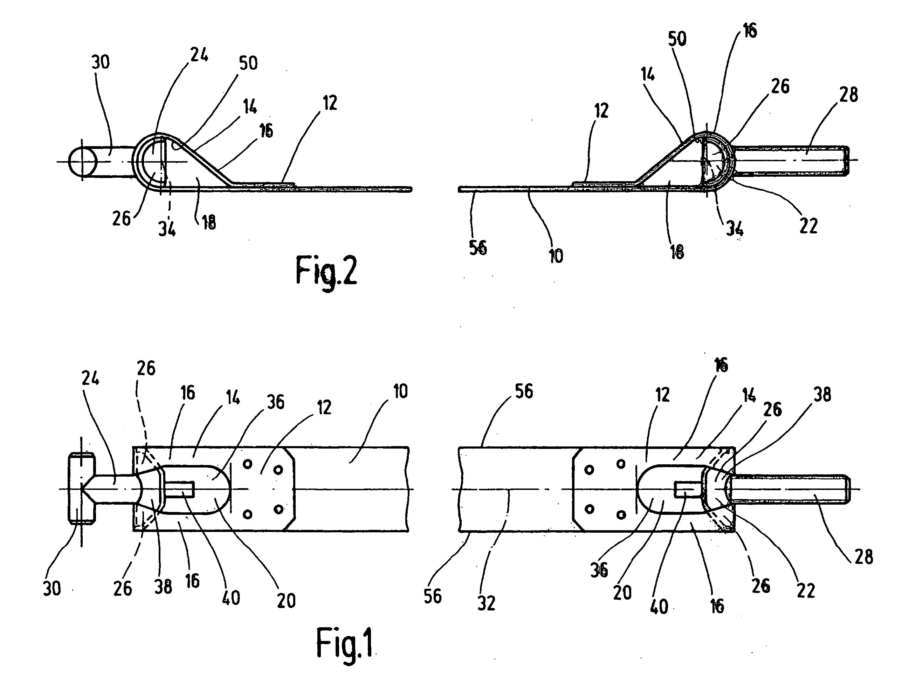

Wie die Fig.1 und 2 zeigen, weist die Befestigungsvorrichtung ein einstükkiges, biegsames Schellenband 10 auf. Länge und Breite des Schellenbandes 10 sind vorgebbar. Die beiden freien Enden 12 des Schellenbandes sind umgeschlagen und bilden dergestalt jeweils eine Aufnahmeschlaufe 14 aus. Jede Aufnahmeschlaufe 14 ist seitlich von zwei Umfassungsteilen 16 begrenzt, die einen Aufnahmeraum 18 umfassen und zwischen sich eine Aufnahmeöffnung 20 begrenzen, die den Aufnahmeraum 18 mit der Umgebung verbindet.

In die beiden Aufnahmeräume 18 ist jeweils ein Haltemittel 22,24 einsetzbar, wobei das jeweilige Haltemittel 22,24 für eine Anlage mit den beiden Umfassungsteilen 16 zwei diametral einander gegenüberliegende Halteteile 26 aufweist sowie über ein Funktionsteil 28 bzw. 30 verfügt, das in eingesetztem Zustand des Haltemittels 22,24 im jeweils zugeordneten Aufnahmeraum 18 aus der Aufnahmeöffnung 20 herausragt.

Das jeweilige Haltemittel 22,24 ist mit einem seiner beiden Halteteile 26 in einer Einsetzrichtung über die Aufnahmeöffnung 20 in den zugeordneten Aufnahmeraum 18 einbringbar, wobei die dahingehende Einsetzrichtung parallel zur Längsachse 32 des Schellenbandes 10 verläuft, so daß beim Einsetzen des jeweiligen Haltemittels 22,24 seine jeweils beiden Halteteile 26 mit ihrer Längsachse 34 im wesentlichen parallel zur genannten Längsachse 32 des Schellenbandes 10 orientiert sind. Ist ein Halteteil 26 des jeweiligen Haltemittels 22,24 über die Aufnahmeöffnung 20 in den Aufnahmeraum 18 eingebracht, wird von Hand mittels Schwenken des Haltemittels 22,24 über sein Funktionsteil 28 dieses in eine Festlegerichtung verschwenkt, die im wesentlichen quer zur Einsetzrichtung ist und mithin senkrecht zur Längsachse 32 des Schellenbandes 10 verläuft.

In der dahingehenden Einbausituation untergreifen dann die beiden Halteteile 26 des jeweiligen Haltemittels 22,24 von ihrer Unterseite her die jeweiligen Umfassungsteile 16 einer Aufnahmeschlaufe 14. Die dahingehende Festlegesituation der beiden Haltemittel 22,24 entspricht der Darstellung nach den Fig.1 und 2. Des weiteren bleibt festzuhalten, daß in dieser Einbausituation jedenfalls die Haltemittel 22,24 lose im Aufnahmeraum 18 geführt um ihre jeweilige Längsachse 34 verschwenkt werden können; in Blickrichtung auf die Fig.1 und 2 gesehen jeweils für das linke Haltemittel 24 im Uhrzeigersinn und für das gegenüberliegende Haltemittel 22 im Gegenuhrzeigersinn. Beide Haltemittel 22,24 sind also somit in Richtung ihrer Einsetzrichtung rückschwenkbar in der zugeordneten Aufnahmeschlaufe 14 gelagert und können dergestalt auch wieder durch umgekehrten Bewegungsablauf aus der Aufnahmeschlaufe 14 unter Freigabe des Schellenbandes 10 herausgeführt werden.

Die Aufnahmeöffnung 20 der jeweiligen Aufnahmeschlaufe 14 verläuft mithin entlang der Längsachse 32 des Schellenbandes 10, wobei die Aufnahmeöffnung 20 drei Teilbereiche 36,38 und 40 aufweist mit unterschiedlichen, insbesondere in dieser Reihe abnehmenden Öffnungsquerschnitten. Wie bereits dargelegt, weist der erste Teilbereich 36 den größten Öffnungsquerschnitt zum Einsetzen des jeweiligen Haltemittels 22,24 auf und der nachfolgende zweite Teilbereich 38 mit dem gegenüber kleineren Öffnungsquerschnitt dient dem Durchgriff des Funktionsteils 28,30 bei in der Aufnahmeschlaufe 14 vollständig eingesetztem Haltemittel 22,24.

Der sich an den zweiten Teilbereich 38 anschließende dritte Teilbereich 40 bildet eine Art Schlitzöffnung aus und an der Stelle des Überganges der Öffnungen mit unterschiedlichen Querschnitten zwischen dem zweiten und dem dritten Teilbereich 38 bzw. 40 wird dergestalt ein Anschlag für das jeweilige Funktionsteil 28,30 ausgebildet, wobei der Anschlag eine Vormontagelage sicherstellt, was das Anbringen der Befestigungsvorrichtung an weiteren anderen Komponenten, beispielsweise im Fahrzeuginneren, deutlich erleichtert.

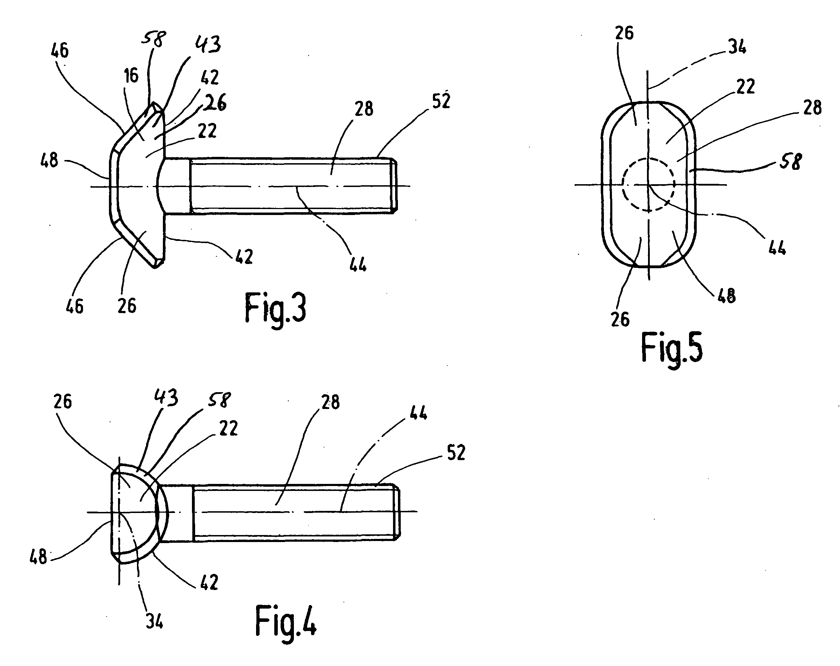

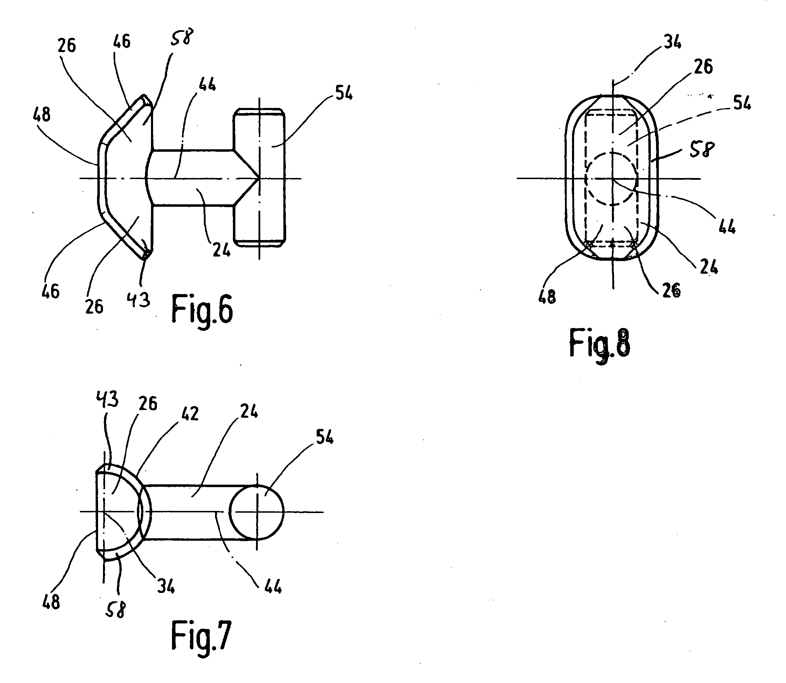

Wie in den Fig.3 bis 8 dargestellt, weist das jeweilige Haltemittel 22,24 zwei diametral einander gegenüberliegende Halteteile 26 mit Halteflächen 42 auf, wobei das Funktionsteil 28,30 mit seiner Längsachse 44 senkrecht zur gemeinsamen Längsachse 34 der Halteteile 26 verläuft. Wie sich des weiteren aus den Darstellungen ergibt, ist die jeweilige Haltefläche 42 mit einer konvexen Krümmung versehen, wobei die voneinander abliegenden Endflächen der Halteteile 26 auf der dem Funktionsteil 28,30 abgewandten Seite jeweils mit einer Einführschräge 46 versehen sind. Insbesondere bildet die Einführschräge 46 mit der Unterseite 48, die senkrecht zur Längsachse 44 der Funktionsteile 28,30 verläuft, einen Winkel von etwa 45° aus. Wie sich des weiteren aus den Fig.4 und 7 ergibt, bilden die konvex gekrümmten Halteflächen 42 im wesentlichen von der Seite gesehen, also quer zu ihrer gemeinsamen Längsachse 34, einen Halbkreisbogen 43 aus, der dem jeweiligen Funktionsteil 28,30 zugewandt ist. Des weiteren kann vorgesehen sein, daß die Halteflächen 42 der Halteteile 26 randseitig zumindest teilweise mit Fasen 58 versehen sind, was gleichfalls die Ein- und Ausführvorgänge für das jeweilige Halteteil 26 erleichtert.

Die Umfassungsteile 16 der jeweiligen Aufnahmeschlaufe 14 sind unter Bildung von Anlageflächen 50 (vgl. Fig.2) gleichfalls mit einer konvexen Krümmung versehen, die bei festgelegtem Haltemittel 22,24 der konvexen Krümmung der genannten Halteflächen 42 entspricht. Dergestalt kann das jeweilige Haltemittel 22,24 über seine Halteflächen 42 der Krümmung der Anlageflächen 50 nachfolgen, so daß insbesondere im festgelegten Bereich des jeweiligen Haltemittels 22,24 ein deckender Untergriff mit den Umfassungsteilen 16 erreicht ist, mit der Folge, daß im festgelegten Zustand des Schellenbandes 10 sich hohe Kräfte über die Haltemittel 22,24 in das Schellenband 10 ableiten lassen.

Das Funktionsteil 28 nach den Fig.3 bis 5 ist an seinem freien Ende mit einem Einschraubgewinde 52 versehen, so daß über eine nicht näher dargestellte Kontermutteranordnung sich dergestalt das Haltemittel 22 an nicht weiter dargestellten Einbauteilen festlegen läßt. Bei der Ausgestaltung des Haltemittels 24 gemäß der Darstellung nach den Fig.6 bis 8 ist dort das Funktionsteil 30 an seinem freien Ende mit einem Festlegebolzen 54 versehen, dessen freie Enden gemäß der Darstellung nach der Fig.1 im Bereich der beiden Längsränder 56 des Schellenbandes 10 enden. Der dahingehende Festlegebolzen 54 läßt sich über zwei krampenartige Finger eines weiteren Festlegeteils (nicht dargestellt) an Einbauteilen festlegen, wobei das Schellenband 10 in begrenztem Umfang und zumindest bis zu dem genannten Anschlag gegenüber den Halteflächen 42 des Haltemittels 22 verschwenkt werden kann. Übergreift das Schellenband 10 dann einen nicht näher dargestellten Körper, beispielsweise in Form eines rohrförmigen Scheibenfilters od. dgl., läßt sich das Schellenband 10 über das Haltemittel 22 mit seinem Einschraubgewinde 52 entsprechend an einem Festlegeteil über die Kontermutterverbindung für einen festen Sitz spannen.

Die gezeigte Befestigungsvorrichtung besteht aus wenigen Komponenten, nämlich dem Schellenband 10 und den beiden Haltemitteln 22,24, so daß sich dergestalt die Anordnung im Herstellwerk komplementieren läßt; vorzugsweise aber vor Ort an der Stelle der Montage. Die genannte Anordnung ist leicht lösbar, so daß bei Austausch des festzulegenden Körpers, beispielsweise in Form eines Scheibenfilters od. dgl., ein Austauschvorgang rasch vonstatten gehen kann. Die dahingehenden Austausch- und Montagezeiten lassen sich somit gleichfalls gering halten.

## Patentansprüche

1. Befestigungsvorrichtung mit einem Schellenband (10), wobei zumindest ein Ende (12) des Schellenbandes (10) unter Bildung einer Aufnahmeschlaufe (14) umgeschlagen ist, die mittels zweier Umfassungsteile (16) einen Aufnahmeraum (18) umfaßt, in den ein Haltemittel (22,24) einsetzbar ist, und der zumindest eine zwischen den beiden Umfassungsteilen (16) angeordnete Aufnahmeöffnung (20) besitzt, wobei das Haltemittel (22,24) für eine Anlage mit den beiden Umfassungsteilen (16) zwei einander gegenüberliegende Halteteile (26) aufweist sowie über ein Funktionsteil (28,30) verfügt, das in eingesetztem Zustand des Haltemittels (22,24) im Aufnahmeraum (18) aus der Aufnahmeöffnung (20) herausragt, wobei das Haltemittel (22,24) mit mindestens einem seiner beiden Halteteile (26) in einer Einsetzrichtung über die Aufnahmeöffnung (20) in den Aufnahmeraum (18) einbringbar ist, wobei nach Verschwenken des zumindest teilweise eingebrachten Haltemittels (22,24) in einer Festlegerichtung quer zur Einsetzrichtung die Halteteile (26) in untergreifende Anlage bringbar sind mit den Umfassungsteilen (16), wobei der Aufnahmeraum (18) derart dimensioniert ist, daß mit einem vorgebbaren Spiel das eingebrachte Haltemittel (22,24) mit seinen beiden Halteteilen (26) in den Aufnahmeraum (18) eingreift, wobei das jeweilige Haltemittel (22,24) zwei diametral einander gegenüberliegende Halteteile (26) mit Halteflächen (42) aufweist, wobei das Funktionsteil (28,30) zumindest teilweise senkrecht zur gemeinsamen Längsachse (34) der Halteteile (26) verläuft, und wobei die jeweilige Haltefläche (42) mit einer konvexen Krümmung versehen ist, **dadurch gekennzeichnet, daß** die konvexe Krümmung dem Funktionsteil (28,30) zugewandt sich im wesentlichen entlang eines Halbkreisbogens (43) quer zur gemeinsamen Längsachse (34) der Halteteile (26) erstreckt und daß die voneinander abliegenden Endflächen der Halteteile (26) auf der dem Funktionsteil (28,30) abgewandten Seite jeweils mit einer Einführschräge (46) versehen sind, die jeweils in den zugeordneten Halbkreisbogen (43) übergehen.

2. Befestigungsvorrichtung nach Anspruch 1, **dadurch gekennzeichnet, daß** die Aufnahmeöffnung (20) der jeweiligen Aufnahmeschlaufe (14) entlang der Längsachse (32) des Schellenbandes (10) verläuft, daß die Aufnahmeöffnung (20) mindestens zwei Teilbereiche (36,38) mit unterschiedlichen Öffnungsquerschnitten aufweist, und daß der Teilbereich (36) mit dem größeren Öffnungsquerschnitt dem Einsetzen des Haltemittels (22,24) und der andere Teilbereich (38) mit dem kleinerem Öffnungsquerschnitt dem Durchgriff des Funktionsteils (28,30) bei in der Aufnahmeschlaufe (14) vollständig eingesetztem Haltemittel (28,30). dient.

3. Befestigungsvorrichtung nach Anspruch 2, **dadurch gekennzeichnet, daß** neben den beiden Teilbereichen (36,38) ein dritter Teilbereich (40) vorhanden ist, der in der Art eines Schlitzes mit weiter reduziertem Öffnungsquerschnitt ausgebildet sich an den zweiten Teilbereich (38) in Richtung des Schellenbandes (10) anschließt und einen Anschlag für das Funktionsteil (28,30) ausbildet.

4. Befestigungsvorrichtung nach einem der Ansprüche 1 bis 3, **dadurch gekennzeichnet, daß** die Umfassungsteile (16) der jeweiligen Aufnahmeschlaufe (14) unter Bildung von Anlageflächen (50) mit einer konvexen Krümmung versehen sind, die bei festgelegtem Haltemittel (22,24) der konvexen Krümmung der Halteflächen (42) entspricht.

5. Befestigungsvorrichtung nach einem der Ansprüche 1 bis 4, **dadurch gekennzeichnet, daß** das jeweilige Funktionsteil (28,30) an seinem freien Ende mit einem Einschraubgewinde (52) versehen ist oder einen Festlegebolzen (54) aufweist, dessen freie Enden bei eingesetztem Haltemittel (24) im Bereich der beiden Längsränder (56) des Schellenbandes (10) enden.

6. Befestigungsvorrichtung nach einem der Ansprüche 1 bis 5, **dadurch gekennzeichnet, daß** das Haltemittel (22,24) einstückig in der Art eines Hammerkopfes ausgebildet ist und daß das Schellenband (10) von Hand biegsam ausgestaltet ist.

7. Befestigungsvorrichtung nach einem der Ansprüche 1 bis 6, **dadurch gekennzeichnet, daß** die Einführschrägen (46) gerundet in eine ebene Bodenfläche (47) des Haltemittels (22,24) übergehen, die dem Funktionsteil (28,30) abgewandt ist.

8. Befestigungsvorrichtung nach einem der Ansprüche 1 bis 7, **dadurch gekennzeichnet, daß** die Halteflächen (42) der Halteteile (26) randseitig zumindest teilweise mit Phasen (58) versehen sind.

## Claims

1. A fixing device with a lug strip (10), at least one end (12) of the lug strip (10) being bent to form a fixing loop (14) which encompasses a fixing space (18) by means of two enclosing pieces (16) into which a retaining means (22, 24) may be introduced, and which has at least one fixing opening (20) disposed between the two enclosing pieces (16), the retaining means (22, 24) having two opposing retaining pieces (16) for a unit with the two enclosing pieces (16), and having a functional piece (28, 30) which in the inserted state of the retaining means (22, 24) within the fixing space (18) projects out of the fixing opening (20), it being possible to position the retaining means (22, 24) in the fixing space (18) with at least one of its two retaining pieces (26) in an insertion direction via the fixing opening (20), after pivoting the at least partially positioned retaining means (22, 24) in a securing direction laterally to the insertion direction, it being possible to bring the retaining pieces (26) to engage from beneath with the enclosing pieces (16), the fixing space (18) being dimensioned such that the positioned retaining means (22, 24) with its two retaining pieces (26) engages in the fixing space (18) with pre-specifiable play, the respective retaining means (22, 24) having two diametrically opposed retaining pieces (26) with retaining surfaces (42), the functional piece (28, 30) extending at least partially perpendicularly to the common longitudinal axis (34) of the retaining pieces (26), and the respective retaining surface (42) being provided with a convex curvature, **characterised in that** the convex curvature facing towards the functional piece (28, 30) extends substantially along a semicircular arch (43) laterally to the common longitudinal axis (34) of the retaining pieces (26) and that the end surfaces of the retaining pieces (26) set apart from one another are respectively provided on the side facing away from the functional piece with a guide-in slant (46) which respectively pass over to the assigned semicircular arch (43).

2. The fixing device according to Claim 1, **characterised in that** the fixing opening (20) of the respective fixing loop (14) extends along the longitudinal axis (32) of the lug strip (10), that the fixing opening (20) has at least two partial regions (36, 38) with different opening cross-sections, and that the partial region (36) with the larger opening cross-section is used for the insertion of the retaining means (22, 24), and the other partial region (38) with the smaller opening cross-section is used for the passage of the functional piece (28, 30) with retaining means (28, 30) inserted fully in the fixing loop (14).

3. The fixing device according to Claim 2, **characterised in that** in addition to the two partial regions (36, 38), a third partial region (40) is provided which, designed in the manner of a slot with a further reduced opening cross-section, is adjacent to the second partial region (38) in the direction of the lug strip (10) and forms a stop for the functional piece (28, 30).

4. The fixing device according to any of Claims 1 to 3, **characterised in that** the enclosing pieces (16) of the respective fixing loop (14) forming contact surfaces (50) are provided with a convex curvature which, when the retaining means (22, 24) are secured, corresponds to the convex curvature of the retaining surfaces (42).

5. The fixing device according to any of Claims 1 to 4, **characterised in that** the respective functional piece (28, 30) is provided on its free end with a screw-in thread (52) or has a securing bolt (54) the free ends of which, when the retaining means (24) is inserted, end in the region of the two longitudinal edges (56) of the lug strip (10).

6. The fixing device according to any of Claims 1 to 5, **characterised in that** the retaining means (22, 24) is designed as one piece in the manner of a hammer head, and that the lug strip (10) is designed to be manually bendable.

7. The fixing device according to any of Claims 1 to 6, **characterised in that** the guide-in slants (46) pass, rounded, into a level base surface (47) of the retaining means (22, 24) which faces away from the functional piece (28, 30).

8. The fixing device according to any of Claims 1 to 7, **characterised in that** the retaining surfaces (42) of the retaining pieces (26) are provided on the edge side at least partially with stages (58).

## Revendications

1. Dispositif de fixation comprenant une bande de collier (10), dans lequel
au moins une extrémité (12) de la bande de collier (10) est rabattue en formant une boucle de réception (14) qui entoure, au moyen de deux parties latérales d'encerclement (16), un espace de réception (18) dans lequel peut être inséré un moyen de retenue (22, 24) et qui posséde au moins une ouverture de réception (20) agencée entre les deux parties latérales d'encerclement (16),
le moyen de retenue (22, 24) dispose, pour un appui sur les deux parties latérales d'encerclement (16), de deux parties de retenue (26) mutuellement opposées, ainsi que d'une partie fonctionnelle (28, 30) qui, dans l'état du moyen de retenue (22, 24) inséré dans l'espace de réception (18), fait saillie hors de l'ouverture de réception (20),
le moyen de retenue (22, 24) peut, par au moins l'une de ses deux parties de retenue (26), être introduit selon une direction d'insertion, par l'intermédiaire de l'ouverture de réception (20), dans l'espace de réception (18),
après pivotement du moyen de retenue (22, 24) au moins partiellement introduit, dans une direction de fixation transversale à la direction d'insertion, les parties de retenue (26) peuvent être amenées en appui sous les parties latérales d'encerclement (16),
l'espace de réception (18) est dimensionné de façon telle que le moyen de retenue (22, 24) introduit pénètre selon un jeu pouvant être prédéterminé, par ses deux parties de retenue (26), dans l'espace de réception (18),
chaque moyen de retenue (22, 24) a deux parties de retenue (26) diamétralement opposées et ayant des surfaces de retenue (42),
la partie fonctionnelle (28, 30) s'étend au moins en partie perpendiculairement à l'axe longitudinal (34) commun des parties de retenue (26), et
la surface de retenue (42) respective est pourvue d'une courbure convexe,
**caractérisé en ce que** la courbure convexe s'étend, en étant dirigée vers la partie fonctionnelle (28, 30), sensiblement le long d'un arc en demi-cercle (43), transversalement à l'axe longitudinal (34) commun des parties de retenue (26), et **en ce que** les surfaces terminales, éloignées l'une de l'autre des parties de retenue (26), sont pourvues sur le côté éloigné de la partie fonctionnelle (28, 30), chacune d'une rampe inclinée d'entrée (46), chacune de ces rampes inclinées se raccordant à l'arc en demi-cercle (43) associé.

2. Dispositif de fixation selon la revendication 1, **caractérisé en ce que** l'ouverture de réception (20) de la boucle de réception (14) respectivement considérée s'étend le long de l'axe longitudinal (32) de la bande de collier (10), **en ce que** l'ouverture de réception (20) a au moins deux zones partielles (36, 38) ayant des sections d'ouverture différentes, et **en ce que** la zone partielle (36) présentant la section d'ouverture la plus grande sert à l'insertion du moyen de retenue (22, 24), et l'autre zone partielle (38) ayant la section d'ouverture la plus petite, sert au passage de la partie fonctionnelle (28, 30) lorsque le moyen de retenue (22, 24) est totalement inséré dans la boucle de réception (14).

3. Dispositif de fixation selon la revendication 2, **caractérisé en ce qu'**en-dehors des deux zones partielles (36, 38), il existe une troisième zone partielle (40) qui, réalisée à la manière d'une fente à section d'ouverture réduite davantage encore, se raccorde à la deuxième zone partielle (38) en direction de la bande de collier (10), et forme une butée pour la partie fonctionnelle (28, 30).

4. Dispositif de fixation selon l'une des revendications 1 à 3, **caractérisé en ce que** les parties latérales d'encerclement (16) de chaque boucle de réception (14) sont dotées, en formant des surfaces de butée (50), d'une courbure convexe qui, lorsque le moyen de retenue (22, 24) est fixé, correspond à la courbure convexe des surfaces de retenue (42).

5. Dispositif de fixation selon l'une des revendications 1 à 4, **caractérisé en ce que** la partie fonctionnelle (28, 30) respective est pourvue à son extrémité libre d'un filetage à visser (52), ou y présente un tourillon de fixation (54) dont les extrémités libres, lorsque le moyen de retenue (24) est inséré, se terminent dans la zone des deux bords longitudinaux (56) de la bande de collier (10).

6. Dispositif de fixation selon l'une des revendications 1 à 5, **caractérisé en ce que** le moyen de retenue (22, 24) est réalisé d'un seul tenant à la manière d'une tête de marteau, et **en ce que** la bande de collier (10) est conçue de manière à pouvoir être fléchie ou cintrée à la main.

7. Dispositif de fixation selon l'une des revendications 1 à 6, **caractérisé en ce que** les rampes inclinées d'entrée (46) se raccordent de manière arrondie à une surface de fond (47) plane du moyen de retenue (22, 24), qui est située à l'opposé de la partie fonctionnelle (28, 30).

8. Dispositif de fixation selon l'une des revendications 1 à 7, **caractérisé en ce que** les surfaces de retenue (42) des parties de retenue (26) sont pourvues sur leurs bords, au moins en partie, de chanfreins (58).
